(19) Europäisches Patentamt
European Patent Office
Office européen des brevets

(11) **EP 3 800 147 A1**

(12) **EUROPÄISCHE PATENTANMELDUNG**

(43) Veröffentlichungstag:
**07.04.2021  Patentblatt 2021/14**

(51) Int Cl.:
***B65G 27/32*** *(2006.01)*

(21) Anmeldenummer: **19201155.9**

(22) Anmeldetag: **02.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Flexfactory AG**
**8953 Dietikon (CH)**

(72) Erfinder: **BÜCHI, Felix**
**8114 Dänikon (CH)**

(74) Vertreter: **Keller Schneider**
**Patent- und Markenanwälte AG (Bern)**
**Eigerstrasse 2**
**Postfach**
**3000 Bern 14 (CH)**

(54) **VIBRATIONSTISCH UND ZUFÜHRUNG MIT VIBRATIONSTISCH**

(57)    Ein Vibrationstisch (1) umfasst eine Tischplatte (2) und einen Antrieb (3), wobei der Antrieb (3) vier Scherenmechaniken (41, 42, 43, 44) mit je einem ersten (41.1, 42.1, 43.1, 44.1) und einem zweiten Schenkel (41.2, 42.2, 43.2, 44.2) und einem Knotenpunkt (41.3, 42.3, 43.3, 44.3) umfasst, wobei die Knotenpunkte (41.3, 42.3, 43.3, 44.3) an der Tischplatte (2) befestigt sind und der erste Schenkel (41.1, 42.1, 43.1, 44.1) unabhängig vom zweiten Schenkel (41.2, 42.2, 43.2, 44.2) bewegt werden kann.

Fig. 1a

EP 3 800 147 A1

## Beschreibung

### Technisches Gebiet

Die Erfindung betrifft einen Vibrationstisch und eine Zuführung mit einem erfindungsgemässen Vibrationstisch. Zudem betrifft die Erfindung verschiedene Verfahren zum Betreiben und Einrichten eines erfindungsgemässen Vibrationstisches und einer erfindungsgemässen Zuführung.

Zuführungen dienen dazu Teile eines Schüttgutes zu vereinzeln, so dass sie von einem Roboterarm oder mit anderen Mitteln einzeln erfasst und weitertransportiert werden können. Es handelt sich dabei oft um Kleinteile mit vergleichsweise komplizierter Geometrie wie Schraubklemmen, Lampenfassungen, Interdentalbürsten, Nadeln, Tasten, Federn, Kanülen, Hochstromkontakte, Zahnräder, Deckel, Spielzeugteile, elektrische Drosseln und ähnliches.

### Stand der Technik

Es ist aus dem Stand der Technik bekannt, derartige Zuführungen mit einem Vibrationstisch auszurüsten. Das Schüttgut wird in kleinen Portionen auf den Vibrationstisch gegeben und durch Vibrationen vereinzelt. Durch stärkere Vibrationen können die Teile des Schüttguts teilweise auch gewendet werden.

Eine derartige Zuführung wird beispielsweise in der EP 2 393 739 B1 (Asyril) beschrieben. Dieses Dokument lehrt, die Vibration durch drei senkrecht zueinander stehende piezoelektrische, elektromechanische, pneumatische oder hydraulische Antriebe zu erzeugen, die unabhängig voneinander auf die Tischplatte wirken. Die Antriebe bestehen aus jeweils zwei Teilen, die sich gegeneinander bewegen und einer Führung.

Der Nachteil bei dieser Antriebstechnik liegt darin, dass die entstehenden Vibrationen von der Last auf dem Tisch abhängen: Die Eindringtiefe des einen Teiles des Antriebs in den anderen Teil nimmt in der vertikalen Richtung zumindest bei elektromechanischen und dem pneumatischen Antrieb mit zunehmender Belastung des Tisches zu. Die Beladung ist also entweder recht genau zu spezifizieren oder der Antrieb muss vergleichsweise stark ausgelegt werden. Ein piezoelektrischer Antrieb ist in seiner Amplitude sehr beschränkt. Hydraulische und pneumatische Antriebe sind zudem technisch aufwendig, da sie flüssigkeits- bzw. gas-dicht gestaltet sein müssen. Die EP '739 geht nicht darauf ein, wie dies bei einer vergleichsweise kleinen Zuführung und drei unabhängig voneinander betreibbaren Antrieben gelingen könnte.

### Darstellung der Erfindung

Aufgabe der Erfindung ist es, einen dem eingangs genannten technischen Gebiet zugehörenden Vibrationstisch zu schaffen, welcher in Amplitude und Frequenz gleichbleibende Schwingungen unabhängig von seiner Beladung ausführt und der sowohl ein Ausbreiten von Schüttgut als auch einen gezielten Transport als auch ein Wenden von Teilen des Schüttgutes ermöglicht.

Die Lösung der Aufgabe ist durch die Merkmale des Anspruchs 1 definiert. Gemäss der Erfindung umfasst der Vibrationstisch eine Tischplatte und einen Antrieb. Der Antrieb umfasst vier Scherenmechaniken. Eine Scherenmechanik hat je einen ersten und einen zweiten Schenkel und einen Knotenpunkt. Die Knotenpunkte sind an der Tischplatte befestigt. Der erste Schenkel kann unabhängig vom zweiten Schenkel bewegt werden.

Es besteht hier also immer eine mechanische Verbindung zwischen der feststehenden Basis, welche die Scherenmechaniken trägt und dem gegenüber der Basis vibrierenden Vibrationstisch. Die Bewegung ist somit zu allen Zeiten geführt und kontrolliert.

Die Übertragung der Schwingungen auf unterschiedliche Stellen der Tischplatte erlaubt es, einen Zustand zu erzeugen, in dem die Tischplatte im zeitlichen Mittel zu genau einer Seite hin abfällt, was, gemeinsam mit der Vibration, zu einer Bewegung der Teile in diese Richtung führt.

Zudem resultiert eine Bewegung eines einzelnen Schenkels einer Scherenmechanik in einer Vibration mit sowohl einer vertikalen als auch einer horizontalen Komponente. Auch diese horizontale Komponente lässt sich auf Teile auf dem Vibrationstisch übertragen und so für eine gezielte horizontale Bewegung nutzen.

Schliesslich kann die Amplitude der entstehenden Schwingung durch ein geschicktes Antreiben der beiden Schenkel variiert werden und somit optimal auf die vorliegende Situation angepasst eingestellt werden.

Bevorzugt schliessen die Schenkel in ihrer Grundstellung einen Winkel von etwa 90° ein.

In dieser Ausführungsform gleichen sich die Beträge der vertikalen und der horizontalen Komponente der Bewegung eines Schenkels in etwa, wenn die Exzentrizität klein ist. Es hat sich gezeigt, dass sich mir dieser Geometrie die Teile zügig und gezielt transportieren lassen.

In einer Ausführungsform ist jeder Schenkel an einer Exzenterscheibe drehbar befestigt. Der Schenkel kann durch Drehung der Exzenterscheibe bewegt werden.

Der Schenkel weist ein kreisrundes Loch auf, welches die Exzenterscheibe aufnehmen kann. Der Mittelpunkt dieses Lochs wird im Folgenden als Mittelpunkt des Schenkels bezeichnet. Der Befestigungspunkt ist diejenige Stelle des Schenkels, die am Knotenpunkt der Scherenmechanik liegt. Die Verbindungslinie zwischen Mittelpunkt des Schenkels und Befestigungspunkt wird im Folgenden als Schenkelstrecke bezeichnet. Die Schenkellänge ist die Länge der Schenkelstrecke.

Die Exzenterscheibe ist eine kreisrunde Scheibe, die von dem Loch des Schenkels aufgenommen werden kann. Sie besitzt einen Mittelpunkt und einen Durchstosspunkt der Rotationsachse. Der Durchstosspunkt der Rotationsachse wird im Folgenden selbst als Rotationsachse bezeichnet. Die Distanz zwischen Rotationsachse und Mittelpunkt der Exzenterscheibe ist die Exzentrizität. Sie hat die Variable e. Angetrieben rotiert die Exzenterscheibe um die Rotationsachse.

Eine Umdrehung der Exzenterscheibe wird im Folgenden auch als ein Antriebszyklus bezeichnet. Die Lage der Rotationsachse bezüglich der Schenkelstrecke definiert eine bestimmte Antriebsstellung. Von besondere Bedeutung ist die Grundstellung, die diejenige Antriebsstellung ist, bei der die Rotationsachse auf dieser Schenkelstrecke liegt. Eine andere spezielle Antriebsstellung ist die Maximalstellung, bei der die Rotationsachse auf der Verlängerung der Schenkelstrecke liegt. Als Antriebsphase wird ein zeitlich zusammenhängender Teil des Antriebszyklus bezeichnet.

Durch die Exzentrizität unterscheidet sich nun der Abstand zwischen Basis-fester Rotationsachse und Vibrationstisch-festem Knotenpunkt. Der Abstand zwischen Rotationsachse und Knotenpunkt wird im Folgenden als effektive Länge eines Schenkels bezeichnet.

Die effektive Länge ist gleich der Schenkellänge minus Exzentrizität, wenn der betreffende Schenkel der Scherenmechanik in der Grundstellung ist. Dies ist die kleinste, während eines Antriebszyklus vorkommende, effektive Länge. Sie wird daher im Folgenden auch als minimale effektive Länge bezeichnet und hat die Variable a.

Die effektive Länge ist gleich der Schenkellänge plus Exzentrizität, wenn der betreffende Schenkel der Scherenmechanik in der Maximalstellung ist. Dies ist die grösste, während eines Antriebszyklus vorkommende, effektive Länge.

Sind beide Schenkel einer Scherenmechanik in der Grundstellung, so bilden die beiden Rotationsachsen und der Knotenpunkt ein gleichschenkliges Dreieck. Die beiden gleich langen Seiten dieses Dreiecks haben die minimale effektive Länge. Der halbe Öffnungswinkel der gleichlangen Seiten $\alpha$ charakterisiert, gemeinsam mit der Schenkellänge und der Exzentrizität die Scherenmechanik.

Bei einer Umdrehung der Exzenterscheibe werden diese beiden Extremwert durchlaufen. Die effektive Länge ändert sich also während eines Antriebszyklus um die doppelte Exzentrizität.

Werden beide Schenkel einer Scherenmechanik synchron von der Grundstellung in die Maximalstellung gebracht, so hebt sich der Knotenpunkt. Dies ist die höchste Amplitude die sich mit dem erfindungsgemässen Antrieb erreichen lässt. Sie wird im Folgenden als maximale Amplitude bezeichnet. Das synchrone Antreiben beider Schenkel einer Scherenmechanik wird im Folgenden als Doppelantreiben bezeichnet.

Wird nur einer der Schenkel einer Scherenmechanik von der Grundstellung in die Maximalstellung gebracht, während der andere Schenkel in der Grundstellung verbleibt, so hebt sich der Knotenpunkt ebenfalls, aber weniger. Die Amplitude dieser Schwingung wird im Folgenden als mittlere Amplitude bezeichnet. Das Antreiben von nur einem Schenkel einer Scherenmechanik bei Verbleib des anderen Schenkels in der Grundstellung wird im Folgenden als Einfachantreiben bezeichnet.

Bei sehr grosser Exzentrizität und Einfachantreiben kann es passieren, dass die grösste Höhe des Knotenpunktes vor der Vervollständigung eines halben Antriebszyklus erreicht wird. Das ist der Fall, wenn

$$\left(\frac{e}{a}\right)\left(1+\frac{e}{a}\right) > \sin(\alpha)^2$$ ist, wobei e die Exzentrizität, a die Schenkellänge abzüglich der Exzentrizität und $\alpha$ der halbe Öffnungswinkel zwischen den Schenkeln in der Grundstellung ist. Eine vollständiger Antriebszyklus umfasst in diesem Fall vier Antriebsphasen: Ausgehend von der Grundstellung geht der Knotenpunkt zunächst hoch und in eine erste horizontale Richtung. Dann ist die mittlere Amplitude erreicht. Die erste Antriebsphase geht nun in die zweite Antriebsphase über, in der der Knotenpunkt sinkt, während er weiter in die erste horizontale Richtung wandert. Ab der Maximalstellung beginnt die dritte Antriebsphase, in der die horizontale Bewegungsrichtung dreht und in eine zweite horizontale Richtung geht, während der Knotenpunkt in vertikaler Richtung wieder ansteigt und zwar bis auf die Höhe der mittleren Amplitude. Hier beginnt die vierte Antriebsphase. In dieser sinkt der Knotenpunkt und bewegt sich weiter in die zweite horizontale Richtung. Pro Antriebszyklus kann also zweimal die mittlere Amplitude erreicht werden.

Bevorzugt wird die Exzentrizität im Bereich von

$$\left(\frac{e}{a}\right)\left(1+\frac{e}{a}\right) \leq \sin(\alpha)^2$$ gewählt, da die Antriebe bevorzugt einzeln angesteuert werden können und somit die beschriebene Frequenzverdopplung auch bei kleinerer Exzentrizität durch ein schnelleres Antreiben realisiert werden kann.

Neben dem Einfachantreiben und dem Doppelantreiben sind eine Vielzahl weitere Antriebsmöglichkeiten realisierbar. So lassen sich zum Beispiel durch einen synchronen aber phasenverschobenen Antrieb beider Schenkel einer Scherenmechanik oder durch einen asynchronen Antrieb, bei dem ein Schenkel schneller als der andere angetrieben wird, eine Vielzahl weiterer Schwingungen erzeugen. Bei einem synchronen, phasenverschobenen Antrieb rotieren beide Exzenterscheiben mit der gleichen Frequenz, aber ihre Bewegung beginnt bei unterschiedlichen Antriebsstellungen. So kann eine Verdopplung der Schwingungsfrequenz gegenüber der Antriebsfrequenz bei einer reduzierten Amplitude in vertikaler Richtung und eine vergrösserten Auslenkung in horizontaler Richtung erreicht durch eine Phasenverschiebung von 180° erreicht werden.

In einer Ausführungsform des Vibrationstisches sind die Knotenpunkte in einer vorderen und einer hinteren Reihe angeordnet. Die vordere und die hintere Reihe verlaufen parallel zueinander. Die Scherenmechaniken sind senkrecht zu diesen Reihen ausgerichtet. Die zwei Knotenpunkte, die in der vorderen Reihe liegen, sind an einer Linearführung an der Tischplatte befestigt.

Die zwei Knotenpunkte, die in der hinteren Reihe liegen, sind fest an der Tischplatte befestigt.

Die Scherenmechanik erlaubt den Schenkeln die Bewegung in einer Ebene oder in zwei zueinander parallelen Ebenen. Diese Ebenen sollten die Ausrichtung der Scherenmechanik definieren. Scherenmechaniken sind also genau dann senkrecht zu einer Reihe ausgerichtet, wenn die Gerade, die durch die Knotenpunkte dieser Reihe verläuft, die Ebene oder die Ebenen der Scherenmechanik senkrecht durchstösst.

Eine Linearführung erlaubt es dem Knotenpunkt der vorderen Reihe, sich parallel zu der Tischplatte in der Ebene der betroffenen Scherenmechanik in gewissen Umfang zu bewegen. Somit ist der Abstand zwischen den Knotenpunkten in der vorderen Reihe und den Knotenpunkten in der hinteren Reihe in einem gewissen Rahmen variabel.

Das erlaubt, die Scherenmechaniken der vorderen Reihe unabhängig von den Scherenmechaniken der hinteren Reihe zu betreiben.

Die minimal nötige Ausdehnung der Linearführung ergibt sich bevorzugt aus der Bestimmung des Abstandes zwischen den Knotenpunkten in dem Fall, dass alle Schenkel der Scherenmechaniken der vorderen Reihe in der Maximalstellung sind und alle Schenkel der Scherenmechaniken der hinteren Reihe in der Grundstellung und umgekehrt, aus der Bestimmung des Abstandes zwischen den Knotenpunkten in dem Fall, dass Schenkel aller Scherenmechaniken in der Grundstellung sind und in dem Fall, dass die jeweils äusseren Schenkel in der Grundstellung sind und die jeweils inneren Schenkel in der Maximalstellung sind.

Die äusseren Schenkel sind dabei diejenigen Schenkel, die im Wesentlichen ausserhalb des durch die Knotenpunkte definierten Rechtecks liegen, und die inneren Schenkel sind dabei diejenigen Schenkel, die im Wesentlichen auf den Begrenzungslinien oder innerhalb des Rechtecks liegen.

In dem Fall, dass es mehr als zwei Reihen von Knotenpunkten gibt, sind bevorzugt die Knotenpunkte der hinteren Reihe fest an der Tischplatte befestigt, während alle übrigen Knotenpunkte in Linearführungen geführt werden. Bevorzugt sind auch solche weiteren Knotenpunkte in Reihen angeordnet, die parallel zu den übrigen Reihen liegen und in denen sich je mindestens zwei Knotenpunkte befinden.

Bei mehr als zwei Reihen von Knotenpunkten gelten bevorzugt in der hinteren Reihe dieselben Schenkel als innere bzw. äussere, wie im Fall der hinteren Reihe bei zwei Reihen. In allen übrigen Reihen werden die Schenkel derart als innere oder äussere Schenkel klassifiziert, wie es der Fall wäre, wenn es nur zwei Reihen, nämlich die betreffende Reihe und die hintere Reihe geben würde.

Die oben beschriebene Linearführung kann auch ganz oder teilweise durch eine virtuelle Linearführung ersetzt werden, in der die Antriebe der vorderen und hinteren Scherenmechaniken derart aufeinander abgestimmt werden, dass die Abstände zwischen den Knotenpunkten im Wesentlichen konstant bleiben. Neben einem gezielten Antrieb aller Scherenmechaniken kann das auch dadurch erreicht werden, dass nicht angetriebene Scherenmechaniken nicht gebremst werden, sondern sich frei mitbewegen können.

In einer Ausführungsform treiben vier elektronisch synchronisierte Motoren die Schenkel an. Bevorzugt handelt es sich um Servomotoren. Bevorzugt versetzt jeder Motor die Exzenterscheiben von jeweils zwei Schenkeln in Drehung. Insbesondere handelt es sich bei den gemeinsam angetriebenen Schenkeln um zwei gegenüberliegende Schenkel.

In einer anderen Ausführungsform treibt ein Motor alle Schenkel an und dieser Motor nutzt dazu eine Mechanik, die es erlaubt, bei Bedarf bestimmte Schenkelgruppen nicht anzutreiben.

Während die Nutzung eines einzelnen Motors den Vorteil hat, dass eben nur ein solcher gebraucht wird und weniger Kalibrierungen notwendig sind, da eine Synchronisation der Schenkel bereits durch die Mechanik erreicht wird, hat die Nutzung mehrerer Motoren den Vorteil, dass sich neue Betriebsverfahren softwaremässig entwickeln und einsetzen lassen.

Bei gegenüberliegenden Schenkeln handelt es sich um Schenkel, deren Verbindungslinie senkrecht zu den Ausrichtungen der Scherenmechaniken liegen. Beispielsweise sind die inneren Schenkel der Scherenmechaniken der vorderen Reihe einander gegenüberliegend.

Die bevorzugte Ausführungsform, dass ein Motor jeweils zwei gegenüberliegende Schenkel antreibt, führt also dazu, dass die Reihen jeweils gleich betrieben werden. Die Vibrationen sind somit spiegelsymmetrisch zu einer Ebene, die eine Symmetrieebene der Knotenpunkte ist und die parallel zu den Ebenen der Scherenmechaniken liegt. Eine horizontale Bewegung parallel zu dieser Ebene ist eine Vorwärts- oder Rückwärtsbewegung. Derartige Vorwärts- und Rückwärtsbewegungen sind in Bezug auf die Nutzung als Zuführsystem besonders nützlich, da sie Teile zu einer effizienten, zielgerichteten Fortbewegung bringen können. Daher kann durch diese bevorzugte Ausführungsform auf einfache Art und Weise die Komplexität des Antriebs reduziert werden, ohne dass wichtige Funktionen verloren gehen.

In einer anderen Ausführungsform wird hingegen jeder Schenkel von einem Motor angetrieben. So können die Teile des Schüttgutes in alle Richtungen bewegt werden.

In einer Ausführungsform eines Vibrationstisches umfasst die Tischplatte eine Förderfläche, einen Klappen-Antrieb und eine Umrandung. Die Umrandung umfasst eine Entleerklappe. Die Knotenpunkte sind an der Umrandung befestigt. Die Entleerklappe kann durch den Kappen-Antrieb in eine geschlossene und eine geöffnete Stellung gebracht werden.

Da die Knotenpunkte an der Umrandung befestigt sind, kann die Förderfläche oder die Umrandung ausgetauscht werden, ohne dass die Knotenpunkte gelöst werden müssen. Die Förderfläche kann somit mit ihrer Farbe, Transparenz, Struktur und Material an die zu fördernden Teile des Schüttgutes angepasst werden. Bei hellen Teilen hilft eine dunkle Förderfläche der Erkennung der Teile bei Beleuchtung von oben. Bei dunklen Teilen erhöht hingegen eine helle Förderfläche den Kontrast in dieser Situation. Wird von unten beleuchtet, so ist eine transparente, das Licht möglichst gleichmässig verteilende Förderfläche in vielen Fällen hilfreich. Durch eine Strukturierung, die feiner ist als bestimmte Abmessungen der Teile kann verhindert werden, dass die Teile vollständig auf der Förderfläche aufliegen und dort haften bleiben. Ausserdem kann eine Strukturierung ein unerwünschtes Rutschen der Teile verhindern. Je nach Elastizität und Reibung zwischen den Teilen und der Förderfläche, was durch Material und Struktur der Förderfläche bestimmt werden kann, kann der Impulsübertrag auf die Teile reguliert werden und so beispielsweise ein Zurückspringen der Teile, im Anschluss an einen durch die Vibration des Tisches verursachten Sprung, weitgehend unterdrückt werden.

Ein Austausch der Umrandung kann insbesondere dann hilfreich sein, wenn die Art der zu führenden Teile geändert wird und sich dadurch signifikante Änderungen in der Flugbahn ergeben. Eine eher tiefe Umrandung erlaubt es einem Roboterarm in vielen Fällen, kürzere Wege zu fahren und somit schneller zu arbeiten. Eine hohe Umrandung verhindert hingegen wirkungsvoll, dass Teile des Schüttguts von der Förderfläche springen.

Die Entleerklappe kann zwei Funktionen haben:

Einerseits kann sie ein automatisches Entleeren der Förderfläche erlauben, indem sie geöffnet wird und währenddessen eine Vibrationsbewegung ausgeführt wird, die die Teile in Richtung der Entleerklappe befördert.

Andererseits kann sie im geschlossenen Zustand eine einschiebbare Förderfläche fixieren.

Bevorzugt gibt es bei dieser Funktion noch eine zweite Sicherung, die verhindert, dass die Förderfläche beim Entleervorgang herausrutscht. Diese zweite Sicherung kann beispielsweise ein Hebel sein, der in waagerechter Stellung die Förderfläche rechts und links an den begrenzenden Abschnitten der Umrandung hält und der zum Austausch der Förderfläche von Hand in einer senkrechte Stellung gebracht werden kann, in der die Förderfläche freigegeben ist und hinaus gezogen werden kann.

Bevorzugt umfasst die Umrandung vier Pfosten, zwei dünne und zwei dicke, einen U-förmigen Rahmen, der bei Bedarf Stabilisierungsverstrebungen aufweisen kann und einen rechteckigen Rahmen, an dessen einer Seite die Entleerklappe angebracht ist, sowie vier Seitenwände. Der U-förmige Rahmen weist bevorzugt eine Nut auf, in welche die Förderfläche eingeschoben werden kann. Die Seitenwände werden bevorzugt von den Pfosten und den beiden Rahmen gehalten. Die beiden dicken Pfosten stellen die Begrenzungspfosten für die Entleerklappe dar und beinhalten den Klappen-Antrieb und gegebenenfalls Führungen für die Entleerklappe sowie bevorzugt die zweite Sicherung für die Förderfläche. Die Knotenpunkte sind bevorzugt am U-Förmigen Rahmen befestigt.

In einer Ausführungsform ist die Förderfläche in die Umrandung einschiebbar.

Durch die Einschiebbarkeit ist ein Wechsel der Förderfläche besonders einfach und schnell. Zudem ist die Förderfläche so stabil mit den übrigen Teilen der Tischplatte verbunden.

In einer anderen Ausführungsform wird die Förderfläche mit Schrauben, Clips oder in die Seitenwände einrastende Stäbe auf einem Boden des Vibrationstisches gehalten.

In einer Ausführungsform umfasst der Vibrationstisch einen Distanzsensor, der zwischen den Scherenmechaniken angeordnet ist. Der Distanzsensor erfasst die Höhe der Tischplatte.

Der Distanzsensor ist bevorzugt ein induktiver Analogsensor.

Bevorzugt ist der Distanzsensor in der Mitte zwischen den Knotenpunkten angeordnet, also im Schnittpunkt der Diagonalen des Rechtecks, wenn die Knotenpunkte im Rechteck angeordnet sind.

Durch die Anordnung des Distanzsensors zwischen allen Scherenmechaniken können mit einem einzelnen Sensor alle Schenkel in ihre Grundstellung gebracht werden und so die Vorrichtung kalibriert werden. Ein Punkt des Vibrationstisches zwischen den Distanzsensoren ist nämlich genau dann am tiefsten in Bezug auf die Basis, wenn alle Schenkel in ihrer Grundstellung sind. Dies ist die Grundstellung des Vibrationstisches.

Ein Verfahren zum Betreiben eines Vibrationstisches umfasst dann auch das Einstellen der Grundstellung. Für das Verfahren werden die folgenden Schritte durchgeführt:

Ein Schenkel oder eine Gruppe von gemeinsam angetriebenen Schenkeln wird bewegt, bis die Höhe der Tischplatte den tiefsten, durch diese Bewegung erreichbaren Wert hat. Alle anderen Schenkel bleiben währenddessen in ihrer aktuellen Antriebstellung. Bei derjenigen Antriebsstellung, bei der die Höhe der Tischplatte den tiefsten Wert annimmt, ist der bewegte Schenkel oder die bewegte Gruppe gemeinsam angetriebener Schenkel in ihrer Grundstellung.

Dann wird dieser erste Schritt mit den weiteren Schenkeln oder Gruppen von gemeinsam angetriebenen Schenkeln wiederholt. Es gibt so viele Wiederholungen, bis alle Schenkel ihre Grundstellung erreicht haben. Dann ist die Grundstellung des Vibrationstisches erreicht.

Die Höhe der Tischplatte wird mit dem Distanzsensor erfasst. Da sich dieser zwischen den Scherenmechaniken befindet, kann die Grundstellung jedes Schenkels unabhängig von der Antriebsstellung der anderen Schenkel ermittelt werden. Da ausserdem stets nur das Minimum gesucht ist, nicht aber ein absoluter Wert, ist die Kalibrierungsmethode robust gegen ein Absinken oder Heben vom Sensor oder von der Tischplatte im Laufe der Zeit.

In einem Verfahren zum Betreiben eines Vibrationstisches werden, um Teile in eine zweite Richtung zu bewegen, alle ersten Schenkel synchron angetrieben. Die zweiten Schenkel bleiben währenddessen in ihrer Grundstellung.

Die ersten Schenkel sind alle Schenkel die für den Betrachter des Vibrationstisches von der Seite her jeweils die linken oder jeweils die rechten Schenkel der Scherenmechaniken darstellen.

Da alle Scherenmechaniken einfachangetrieben werden, erfährt die Tischplatte an allen Knotenpunkten eine vertikale Bewegung der mittleren Amplitude. Da es sich nur um die ersten Schenkel handelt, ist die horizontale Bewegung an allen Knotenpunkten ebenfalls dieselbe. Falls es eine Linearführung gibt, wird diese horizontale Komponente primär von den Scherenmechaniken der Reihe ohne Linearführung auf die Tischplatte übertragen.

Der Antriebszyklus beginnt mit einer Bewegung nach oben und in Richtung der zweiten Schenkel. Durch diese Phase des Antriebszyklus werden die Teile auf der Förderplattform zum Hüpfen in eine zweite Richtung gebracht. Der Antriebszyklus fährt dann mit einer Bewegung nach unten und in Richtung der ersten Schenkel fort. In dieser zweiten Phase besteht aber kein oder weniger Kontakt der Teile mit der Förderplattform, da die Teile bevorzugt noch in der Flugphase sind. Insgesamt werden so, bei einer geeigneten Antriebsfrequenz, die Teile zügig in Richtung der zweiten Schenkel, also in die zweite Richtung, transportiert.

Um Teile auf einer ersten Hälfte des Vibrationstisches zu wenden, während die Teile dabei in Richtung der zweiten Hälfte springen und währenddessen die Teile auf der zweiten Hälfte des Vibrationstisches weitgehend ortstreu sind, werden alle Schenkel der in der ersten Hälfte befestigten Scherenmechaniken synchron angetrieben. Die zweiten Schenkel der in der zweiten Hälfte befestigten Scherenmechaniken bleiben währenddessen in ihrer Grundstellung.

Die erste Hälfte des Vibrationstisches kann für den Betrachter von der Seite die linke oder die rechte Seite des Vibrationstisches sein. Die zweite Hälfte ist diejenige Hälfte, die nicht die erste Hälfte ist.

Die ausgesuchten Scherenmechaniken werden dopppelangetrieben. Die Knotenpunkte diese Scherenmechaniken führen in vertikaler Richtung eine Bewegung mit der maximalen Amplitude aus, aber keine horizontale Bewegung. Die anderen Scherenmechaniken verbleiben in der Grundstellung.

Die Tischplatte kippt also immer wieder hoch in eine Schräge und wieder zurück in die Horizontale. Die erste Hälfte des Vibrationstisches wird bei den Knotenpunkten, die in der ersten Hälfte befestigt sind, dabei immer wieder um die maximale Amplitude angehoben, während die Knotenpunkte der zweiten Hälfte ihre Höhe beibehalten und somit auch die Tischplatte dort tief halten. Durch das Hochfahren der ersten Hälfte werden, bei einer geeigneten Wahl der Antriebsfrequenz, die Teile die dort liegen, hochgeschleudert. Sie bekommen einerseits durch das Kippen der Tischplatte beim Hochfahren und anderseits, weil sie auf eine schräge Ebene zurückfallen, einen Kraftkomponente mit, die sie in Richtung zur zweiten Hälfte hin lenkt. Die Teile in der zweiten Hälfte werden hingegen kaum hochgeschleudert, da die Amplitude der Vibration an ihrer Position tendenziell zu klein ist. Die Teile auf der zweiten Hälfte der Tischplatte sind somit bei diesem Verfahren im Wesentlichen ortsfest.

Ein weiteres Verfahren zum Betreiben eines Vibrationstisches ermöglicht es, Teile auf der ersten Hälfte des Vibrationstisches zu wenden, während die Teile dabei in Richtung der zweiten Hälfte springen. Währenddessen entfernen sich Teile auf der zweiten Hälfte des Vibrationstisches zunehmend weiter von der ersten Hälfte des Vibrationstisches. Dabei werden die äusseren Schenkel der in der ersten Hälfte befestigten Scherenmechaniken und bevorzugt die inneren Schenkel der in der ersten und in der zweiten Hälfte befestigten Scherenmechaniken, synchron angetrieben. Die äusseren Schenkel der in der zweiten Hälfte befestigten Scherenmechaniken bleiben währenddessen in ihrer Grundstellung.

Wenn die erste Hälfte die hintere Hälfte ist, dann sind die Knotenpunkte der dort befestigten Scherenmechaniken fest an der Tischplatte befestigt. Wird von diesen Scherenmechaniken jeweils nur der äussere Schenkel angetrieben, so resultieren daraus eine vertikale Bewegung mit der mittleren Amplitude und eine horizontale Bewegung deren Richtung in der ersten Antriebsphase nach vorne gerichtet ist. In der ersten Antriebsphase ist die Bewegungsrichtung der vertikalen Bewegung nach oben. Die Teile auf der hinteren Hälfte werden also nach oben-vorne gestossen. Im Bereich der vorderen Hälfte der Förderplatte ist die Amplitude in vertikaler Richtung deutlich kleiner, in horizontaler Richtung hingegen im Wesentlichen gleich. Die dort befindlichen Teile wandern somit mit deutlich kleineren Hüpfern ebenfalls nach vorne.

In dem bevorzugten Fall, dass zusätzlich zu den hinteren, äusseren Schenkeln auch die inneren Schenkel angetrieben werden, macht der hintere Knotenpunkt in der ersten Antriebsphase eine vertikale Bewegung nach oben mit der maximalen Amplitude, aber keine horizontale Bewegung. Das Antreiben der inneren Schenkels der vorderen Scherenmechanik sorgt dafür, dass dort in der ersten Antriebsphase eine vertikale Bewegung mit der mittleren Amplitude geschieht und eine horizontale Bewegung nach vorne. Diese horizontale Bewegung nach vorne wird aber weitgehend von der Linearführung aufgenommen und kaum an die Tischplatte weitergegeben. Da nun aber alle Teile eine vertikale Beschleunigung erfahren, mit der sie in die Luft hüpfen, und sie sich auf einer schiefen Ebene befinden, resultiert dennoch eine Bewegung nach vorne. Da die hinteren Knotenpunkte die maximale Amplitude in derselben Zeit erreichen wie die vorderen Knotenpunkte die mittlere Amplitude ist der übertragbare Impuls in der hinteren Hälfte deutlich grösser als in der vorderen Hälfte. Die Antriebsfrequenz kann deshalb derart gewählt werden, dass die Teile der hinteren Hälfte genügend hoch fliegen, um sich zu wenden, während dies in der vorderen Hälfte nicht der Fall ist.

Wenn die erste Hälfte die vordere Hälfte ist, dann sind die Knotenpunkte der dort befestigten Scherenmechaniken über die Linearführungen an der Tischplatte befestigt. Wird von diesen Scherenmechaniken nur der äussere Schenkel angetrieben, so resultieren daraus eine vertikale Bewegung mit der mittleren Amplitude und eine horizontale Bewegung deren Richtung in der ersten Antriebsphase nach hinten gerichtet ist. In der ersten Antriebsphase ist die Bewegungsrichtung der vertikalen Bewegung nach oben. Die horizontale Bewegung wird allerdings kaum auf die Tischplatte übertragen, da die Linearführung sie aufnimmt. Die Teile auf der vorderen Hälfte werden also nach oben gestossen. Im Bereich der hinteren Hälfte der Förderplatte ist die Amplitude in vertikaler Richtung deutlich kleiner. Im Wesentlichen springen also die Teile auf der vorderen Hälfte hoch, wenn auch weniger hoch als im Fall eines Doppelantriebes in der vorderen Hälfte mit derselben Frequenz. Eine gewisse Rückwärtsbewegung, also von vorne nach hinten, ergibt sich aus der, im zeitlichen Mittel, schiefen Ebene, auf welche die Teile treffen.

In dem bevorzugten Fall, dass zusätzlich zu den vorderen, äusseren Schenkeln auch die inneren Schenkel angetrieben werden, macht der vordere Knotenpunkt in der ersten Antriebsphase eine vertikale Bewegung nach oben mit der maximalen Amplitude, aber keine horizontale Bewegung. Das Antreiben der inneren Schenkels der hinteren Scherenmechanik sorgt dafür, dass dort in der ersten Antriebsphase eine vertikale Bewegung mit der mittleren Amplitude geschieht und eine horizontale Bewegung nach hinten. Diese horizontale Bewegung nach hinten wird an die Tischplatte weitergegeben, denn die hinteren Knotenpunkte sind mit ihr fest verbunden. Alle Teile erfahren also sowohl eine vertikale Beschleunigung, mit der sie in die Luft hüpfen, als auch eine horizontale Bewegung. Zudem befinden sie sich auf einer schiefen Ebene. Somit resultiert eine effektive Bewegung nach hinten. Da die vorderen Knotenpunkten die maximale Amplitude in der selben Zeit erreichen wie die hinteren Knotenpunkte die mittlere Amplitude, ist der übertragbare Impuls in vertikaler Richtung in der vorderen Hälfte deutlich grösser als in der hinteren Hälfte, so dass die Antriebsfrequenz derart gewählt werden kann, dass die Teile der vorderen Hälfte genügend hoch fliegen, um sich zu wenden, während dies in der hinteren Hälfte nicht der Fall ist. Der horizontale Anteil des übertragenen Impulses begünstigt ein Wenden zusätzlich.

In einem Verfahren zum Betreiben eines Vibrationstisches, mit dem sich Teile wenden und gleichmässig über die Fläche der Tischplatte verteilen lassen, werden alle Schenkel synchron angetrieben werden.

In dieser Ausführungsform werden alle Scherenmechaniken doppeltangetrieben. Es heben sich also alle Knotenpunkte gleichzeitig um die maximale Amplitude. Es gibt keinen horizontalen Anteil in der Bewegungsrichtung. Folglich springen alle auf der Tischplatte befindlichen Teile hoch. Bei einer geeigneten Frequenz des Antriebs erlaubt die Flughöhe ein Wenden der Teile. Eine strukturierte Oberfläche der Förderplatte kann ermöglichen, dass auf die Teile, trotz der rein vertikalen Bewegung der Tischplatte, ein Drehimpuls der das Wenden und Verteilen fördert, übertragen wird.

Ein erfindungsgemässes Zuführsystem umfasst einen erfindungsgemässen Vibrationstisch, einen Bunker und einen Rücklaufbehälter. Der Rücklaufbehälter steht zumindest teilweise unterhalb des Bunkers. Der Vibrationstisch und der Rücklaufbehälter sind derart angeordnet, dass Teile vom Vibrationstisch aus in den Rücklaufbehälter rutschen und/oder springen können.

Diese Anordnung von Bunker, Vibrationstisch und Rücklaufbehälter ist besonders kompakt und es genügt, dass der Nutzer von einer einzigen Seite aus zugreifen kann, da er von dort sowohl Nachschub in den Bunker schütten kann, als auch aussortierte Teile aus dem Rücklaufbehälter entnehmen kann. Der Rücklaufbehälter kann auch dazu genutzt werden, den Vibrationstisch und gegebenenfalls den Bunker zu leeren, was beispielsweise beim Tausch der Teile wichtig sein kann.

Bevorzugt wird der Vibrationstisch derart angeordnet, dass die vordere Hälfte beim Rücklaufbehälter liegt. Diese Ausführungsform erlaubt einen raschen Transport der Teile in Richtung Rücklaufbehälter, ohne dass diese dabei allzu hoch springen: Es genügt nämlich, die äusseren Schenkel der hinteren Scherenmechaniken anzutreiben und alle übrigen Schenkel in der Grundstellung zu belassen. Durch die feste Verbindung der hinteren Knotenpunkten mit der Tischplatte wird so nämlich zusätzlich zu einem Aufwärtsimpuls auch ein Impuls zur Vorwärtsbewegung gegeben und die Teile wandern rasch in Richtung Rücklaufbehälter ohne dabei allzu weit und allzu hoch zu springen.

In einer anderen Ausführungsform ist der Vibrationstisch derart angeordnet, dass die hintere Hälfte beim Rücklaufbehälter liegt und die Teile somit durch eine Rückwärtsbewegung in den Rücklaufbehälter transportiert werden können. Dazu bietet sich beispielsweise ein Betriebsverfahren an, in welchem alle Schenkel der vorderen Reihe und die inneren Schenkel der hinteren Reihe angetrieben werden, während die äusseren Schenkel der hinteren Reihe in ihrer Grundstellung verbleiben. So wird sowohl die mittlere Neigung der Förderplatte als auch ein Impulsübertrag die Teile in Richtung des Rücklaufbehälters erreicht.

In einer Ausführungsform umfasst der Bunker einen Bunkerantrieb und eine Zuführklappe. Die Zuführklappe verhindert, dass Teile aus dem Bunker zu einem ungewollten Zeitpunkt auf den Fördertisch fallen. Der Bunkerantrieb umfasst bevorzugt eine Exzenterscheibe.

Der Bunker dient als Reservoir des Schüttgutes, welches anschliessend auf dem Vibrationstisch für die Entnahme durch beispielsweise einen Roboterarm ausgebreitet wird.

Um die Teile aus dem Bunker heraus zu bewegen, ist dieser mit einem ähnlichen, aber bevorzugt einfacheren, Antrieb als der Vibrationstisch ausgestattet. So genügt für den Bunkerantrieb beispielsweise ein Exzenter, der eine Vibrationsbewegung erzeugt, die während der Bewegung nach oben auch eine Bewegungskomponente in Richtung Zuführklappe aufweist. Zwecks Stabilität sind bevorzugt mehrere von diesem Exzenter angetriebene Schenkel an dem Bunker befestigt, zum Beispiel an seinen Eckpunkten. So wird ein Kippen des Bunkers verhindert und zwar auch dann, wenn das Schüttgut ungünstig in seinem Inneren verteilt sein sollte.

In einer Ausführungsform besteht der Bunker aus einer Behälteraufnahme, die mit dem Bunkerantrieb verbunden ist und einem Schüttgutbehälter, der mit der Behälteraufnahme verbunden werden kann. Zu der Zuführklappe hin ist der Schüttgutbehälter offen. Die Zuführklappe ist an der Behälteraufnahme ausgebildet.

Die Zuführklappe kann durch einen Motor, den Klappenantrieb der Zuführklappe, automatisch geöffnet und geschlossen werden. Sie bleibt geschlossen, bis auf dem Vibrationstisch weitere Teile gewünscht werden. Besteht der Wunsch nach weiteren Teilen, so öffnet sich die Zuführklappe, während der Bunkerantrieb läuft. Teile im Bunker werden durch die vom Bunkerantrieb verursachten Vibrationen durch die geöffnete Zuführklappe bewegt und fallen von dort auf den Vibrationstisch. Sobald die gewünschte Menge Teile sich auf dem Vibrationstisch befindet, wird die Zuführklappe geschlossen und der Bunkerantrieb gestoppt.

In einer Ausführungsform umfasst der Bunker eine hintere und eine mittlere Lichtschranke. Die hintere Lichtschranke beobachtet einen ersten Bereich vor der Zuführklappe im Inneren des Bunkers. Die mittlere Lichtschranke beobachtet das Innere des Bunkers bei einem zweiten Bereich, der einen festen und bekannten Abstand vom ersten Bereich hat.

Wenn neue Teile auf dem Vibrationstisch gewünscht werden, sollten diese rasch geliefert werden, um die weiteren Verarbeitungsschritte, für welche die Teile benötigt werden, nicht unnötig aufzuhalten. Die hintere Lichtschranke erlaubt es, festzustellen, ob Teile unmittelbar bei der Zuführklappe liegen. Diese Teile werden innert kurzer Zeit aus dem Bunker auf den Vibrationstisch fallen, wenn die Zuführklappe geöffnet und der Bunkerantrieb betätigt wird.

Das Zuführsystem lässt daher bevorzugt den Bunkerantrieb bei geschlossener Zuführklappe und auch ohne aktuelle Anfrage nach mehr Teilen so lange laufen, bis die hintere Lichtschranke Teile detektiert.

Sobald der Bunker leer ist, muss ein Nutzer Teile nachfüllen. Zwecks Arbeitsplanung ist es für den Nutzer wichtig, zu wissen, wie lange es in etwa dauert, bis ein Nachfüllen nötig wird. Im erfindungsgemässen Zuführsystem unterscheidet sich die Zeit für die Entnahme eines Teiles je nach Form, Grösse, Material und Gewicht des Teiles. Die Entnahmezeit, also die Zeit vom ursprünglichen Ort im Bunker bis zum Abtransport vom Vibrationstisch, kann auch noch von weiteren Parametern oder äusseren Umständen abhängen. Um dem Nutzer eine praxisnahe und relevante Schätzung der Zeit bis zum Nachfüllen zu geben, können die hintere und die mittlere Lichtschranke eingesetzt werden.

Dazu wird ein Einlernvorgang ausgeführt. In diesem wird der Zeitpunkt festgestellt, ab dem die mittlere Lichtschranke keine Teile mehr detektiert. Ab diesem Zeitpunkt werden die entnommenen Teile gezählt und zwar solange, bis auch die hintere Lichtschranke keine Teile mehr detektiert. Die Entnahmezeit für ein Teil, bei einem sich leerenden Bunker, kann durch die Dauer zwischen den beiden Zeitpunkten dividiert durch die entnommenen Anzahl Teile abgeschätzt werden.

Wünscht der Nutzer einen Hinweis auf ein bald anstehendes Nachfüllen bei einer bestimmten Restlaufzeit, so kann die Dauer pro Teil durch die Restlaufzeit dividiert werden. Das ergibt eine Schätzung für die Anzahl der noch im Bunker befindlichen Teile, bei welcher der Hinweis gegeben werden soll. Ist nun im Betrieb bekannt, wieviel Teile in den Bunker gefüllt wurden und wieviel dieser Teile bereits entnommen wurden, so kann die Steuerung die übrige Anzahl Teile ermitteln und zum gewünschten Zeitpunkt den Nutzer informieren.

Es ist auch möglich den Hinweis in Abhängigkeit vom letzten detektierten Durchlauf eines Teils durch die mittlere Lichtschranke zu geben. Dazu wird von der im Einlernvorgang ermittelten Dauer die Restlaufzeit abgezogen und der Hinweis nach die Differenzdauer nach dem letzten detektierten Durchlauf eines Teils durch die mittlere Lichtschranke gegeben.

Das Verfahren zum Einlernen eines Zuführsystems, das mit einem Roboter zusammenarbeitet, der Schüttgut von dem Fördertisch entnimmt, umfasst also folgende Schritte:

Der Zeitraum von der letzten Detektion eines Teils durch die mittlere Lichtschranke bis zur letzten Detektion eines Teils durch die hintere Lichtschranke wird bestimmt.

Die in diesem Zeitraum vom Roboter entnommenen Teile werden gezählt.

Die Dauer des Zeitraums wird durch die Anzahl der Teile geteilt. Dieses Resultat wird gespeichert.

Das Resultat ist eine mittlere Entnahmezeit pro Teil bei wenig gefülltem Bunker.

Das Verfahren zum Betrieb eines Zuführsystems umfasst den Schritt, dass nach dem Einfüllen von Schüttgut der Bunker mittels des Bunkerantriebs so lange angetrieben wird, bis die hintere Lichtschranke Teile detektiert.

So können die Teile rasch entnommen werden, wenn sie benötigt werden.

In einer Ausführungsform umfasst das Verfahren zum Betrieb eines Zuführsystems die folgenden Schritte:

Öffnen der Bunkerklappe und Antreiben des Bunkers mit Hilfe des Bunkerantriebs, so dass Teile aus dem Bunker auf den Vibrationstisch fallen.

Betreiben des Vibrationstisches mit Hilfe seines Antriebs so, dass sich die Teile auf der Förderfläche verteilen.

Entnehmen aller passend liegenden Teile auf der Förderfläche.

Anschliessend Betreiben des Vibrationstisches so, dass sich die Lage der Teile ändert, wenn sich noch Teile darauf befinden, die entnommen werden sollen und wenn Teile auf dem Vibrationstisch verbleiben, welche nicht entnommen werden sollen, Öffnen der Entleerklappe und Betreiben des Vibrationstisches so, dass die Teile in den Rücklaufbehälter fallen.

Für das Verteilen der Teile auf der Förderfläche werden bevorzugt die Teile zunächst durch synchrones Antreiben aller vom Bunker wegweisenden Schenkel etwas vom Bunker wegbewegt und anschliessend durch synchrones Antreiben aller Schenkel zu höheren Sprüngen angeregt.

Um die Lage der Teile zu ändern, werden bevorzugt wiederum alle Schenkel oder nur diejenigen Schenkel, deren Knotenpunkte auf der dem Bunker fernen Seite der Tischplatte befestigt sind, synchron angetrieben

Damit die Teile in den Rücklaufbehälter fallen, werden bevorzugt alle auf den Rücklaufbehälter hinweisenden Schenkel synchron angetrieben.

Vom Bunker wegweisende Schenkel sind Schenkel bei denen, in der Grundstellung, der horizontale Abstand zwischen Befestigungspunkt und Bunker grösser ist als der horizontale Abstand vom Mittelpunkt des Schenkels zum Bunker. Analog weisen Schenkel auf dem Rücklaufbehälter hin, wenn, in der Grundstellung, der horizontale Abstand zwischen Befestigungspunkt und Rücklaufbehälter kleiner ist als der horizontale Abstand vom Mittelpunkt des Schenkels und Rücklaufbehälter.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1a    Ein Vibrationstisch in einer Ansicht von schräg oben

Fig. 1b    Ein Vibrationstisch in einer Seitenansicht

Fig. 1c    Der Vibrationstisch von Fig. 1b in der Ansicht von oben, ohne Tischplatte

Fig. 2    Eine schematische Zeichnung eines Zuführsystems

Fig. 3    Eine schematische Zeichnung eines Schenkels einer Scherenmechanik

Fig. 4a    Eine Skizze der Funktionsweise der Scherenmechanik beim Doppelantreiben.

Fig. 4b    Eine Skizze der Funktionsweise der Scherenmechanik beim Einfachantreiben.

Grundsätzlich sind in den Figuren gleiche Teile mit gleichen Bezugszeichen versehen.

**Wege zur Ausführung der Erfindung**

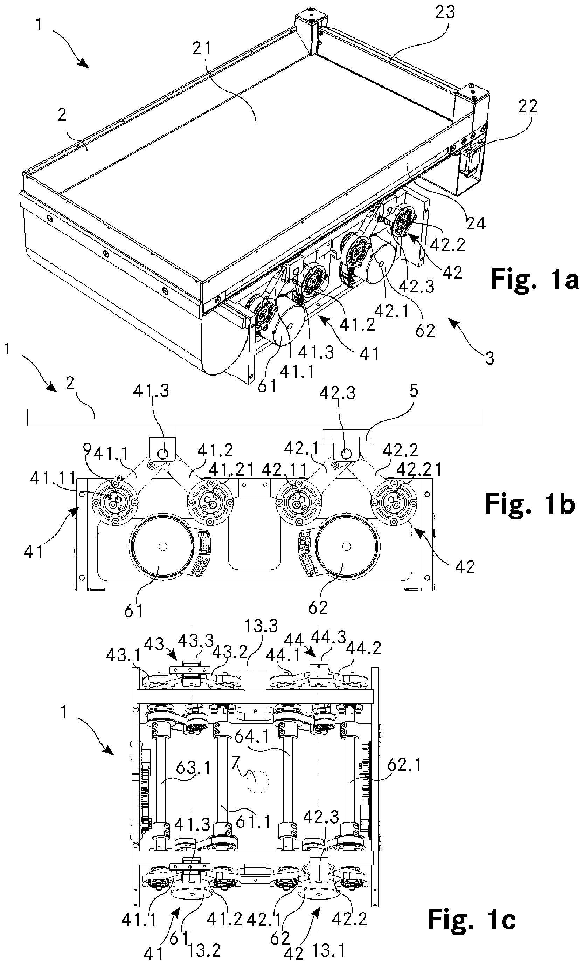

Figur 1a zeigt einen Vibrationstisch 1 in einer Ansicht von schräg oben. Der Blick fällt auf die Tischplatte 2, die eine ebene und rechtwinklige Förderfläche 21 aufweist, die von einer Umrandung 24 umrandet ist. Die Umrandung 24 weist eine gewisse Höhe auf, die aber wesentlich kleiner ist als die Länge oder die Breite der Förderfläche 21 und somit auch als die Länge und Breite der Umrandung 24. Eine der kurzen Seiten der Umrandung 24 ist als Entleerklappe 23 ausgebildet. Sie kann in eine geöffnete Stellung geschwenkt werden, in der die betreffende kurze Seite der Förderfläche 21 freiliegt und nicht durch eine Umrandung 24 oder andere Begrenzung von der Umwelt getrennt ist. Befindet sich die Entleerklappe 23 hingegen in der geschlossenen Stellung, so begrenzt sie, gleich wie die übrigen Seiten der Umrandung 24, die Förderfläche 21 und verhindert so, dass Teile von der Förderfläche 21 springen. Die Entleerklappe 23 wird durch einen Klappenantrieb 22 in die geöffnete oder die geschlossene Stellung gebracht. Der Klappenantrieb 22 ist im gezeigten Beispiel in den beiden Pfosten untergebracht, die die betreffende schmale Seite der Umrandung 24 und somit auch die Entleerklappe 23 flankieren.

Der Vibrationstisch 1 umfasst ausserdem einen Antrieb 3. Der Antrieb 3 befindet sich unterhalb der Tischplatte 2. In der gezeigten Ansicht erkennt man nur eine Hälfte des Antriebs 3. Der Antrieb 3 umfasst insgesamt vier Scherenmechaniken 41,42,43 und 44 und vier Motoren 61,62,63,64. In der gezeigten Ansicht sind allerdings nur zwei Scherenmechaniken 41, 42 und zwei Motoren 61,62 erkennbar. Die Scherenmechaniken umfassen jeweils einen ersten Schenkel 41.1, 42.1, einen zweiten Schenkel 41.2, 42.2 und einen Knotenpunkte 41.3,42.3. Der erste und zweite Schenkel 41.1, 41.2, 42.1, 42.2 kommen im jeweiligen Knotenpunkt 41.3, 42.3 zusammen. Auf der dem Knotenpunkt 41.3, 42.3 abgewandten Seite sind die Schenkel 41.1, 41.2, 42.1, 42.2 an Exzenterscheiben 41.11, 41.21, 41.21, 42.21 befestigt. Die Rotationsachsen 9 der Exzenterscheiben 41.11, 41.21, 41.21, 42.21 liegen in einer Ebene, die, wenn die Scherenmechaniken alle in ihrer Grundstellung sind, parallel zur Förderfläche 21 liegt.

Die Schenkel 41.1, 41.2, 42.1, 42.2 der Scherenmechaniken 41, 42 spannen jeweils ein Dreieck auf.

Beide Dreiecke liegen in derselben Ebene. Diese Ebene ist parallel zu den Ebenen, in denen die langen Seiten der Umrandung 24 liegen. Die Knotenpunkte 41.3, 42.3 sind an der Umrandung 24 befestigt.

Figur 1b zeigte einen Vibrationstisch 1 von der Seite. Die Tischplatte 2 ist nur angedeutet und es sind keine Einzelheiten erkennbar. Der Antrieb 3 mit seinen hier sichtbaren Scherenmechaniken 41 und 42 und den Motoren 61 und 62 ist hingegen gezeigt. In der Ansicht von der Seite lassen sich die Exzenterscheiben 41.11, 41.21, 42.11 und 42.21 gut erkennen. In der Mitte der Exzenterscheiben 41.11, 41.21, 42.11 und 42.21 sind zwei aneinanderstossende Kreise zu erkennen. In einem davon ist ein konzentrischer, kleinerer, zweiter Kreis eingezeichnet. Dieser Doppelkreis markiert jeweils den Mittelpunkt der Exzenterscheiben 41.11, 41.21, 42.11 und 42.21. Der Mittelpunkt jedes Schenkels liegt an derselben Stelle wie der Mittelpunkt der jeweiligen Exzenterscheibe. Der leere Kreis hingegen markiert die Rotationsachse 9. Der Mittelpunkt ist gegenüber der Rotationsachse 9 um die Exzentrizität e versetzt.

Figur 1b zeigte alle Schenkel 41.1, 41.2, 41.2, 42.2 und Exzenterscheiben 41.11, 41.21, 42.11, 42.21 in ihrer Grundstellung: Die Schenkelstrecke entspricht der Strecke vom Mittelpunkt der Exzenterscheiben 41.11, 41.21, 42.11, 42.21 bis zu dem jeweiligen Knotenpunkt 41.3, 42.3, da der Befestigungspunkt des betreffenden Schenkels jeweils am entsprechenden Knotenpunkt liegt und der Mittelpunkt der betreffenden Exzenterscheibe am Mittelpunkt des jeweiligen Schenkels liegt. In der Grundstellung liegt die Rotationsachse 9 auf der Stecke und somit zwischen dem Mittelpunkt der Exzenterscheiben 41.11, 41.21, 42.11, 42.21 und den entsprechenden Knotenpunkt 41.3, 42.3.

In Figur 1b ist zudem die Befestigung der Knotenpunkte 41.3 und 42.3 an der Tischplatte 2 erkennbar. Der Knotenpunkt 41.3 oder 42.3 stellt eine Achse dar, um die beide Schenkel 41.1, 41.2 oder 42.1, 42.2 der betreffenden Scherenmechanik 41 oder 42 zumindest in einem gewissen Winkelbereich rotieren können. Diese Achse wird in diesem Beispiel von einer Hülse mit einer ebenen Oberseite gefasst, die an drei Seiten parallel zu der Achse im Wesentlichen offen ist und somit die Rotation der Schenkel 41.1, 41.2 oder 42.1, 42.2 im regulären Gebrauch nicht einschränkt. In Figur 1b liegt die Scherenmechanik 41 in der hinteren Reihe und die Scherenmechanik 42 in der vorderen Reihe.

Die Scherenmechanik 41 der vorderen Reihe ist mit ihrem Knotenpunkt 41.3 fest mit der Tischplatte 2 verbunden und zwar beispielswiese indem die ebene Oberseite der Hülse an die Tischplatte 2 geklebt oder geschraubt ist. Es kann auch ein Adapterstück oder ein Abstandhalter eine feste Verbindung zwischen Tischplatte 2 und Knotenpunkt 41.3 herstellen.

Die Scherenmechanik 42 der hinteren Reihe ist mit ihrem Knotenpunkt 42.3 mittels einer Linearführung 5 an der Tischplatte 2 befestigt. Die Linearführung 5 wird hier durch einen T-Träger realisiert, der in einem gewissen Abstand parallel zur Tischplatte gehalten wird. Der T-Träger liegt in der Ebene, die durch die Scherenmechanik 42 definiert wird. Mit der breiten Seite der T-Form, im Folgenden als "Dach" bezeichnet, zeigt der Träger weg von der Tischplatte 2. Die Hülse, die der Befestigung des Knotenpunktes 42.3 dient, umfasst auf ihrer ebenen Oberfläche eine Führung. Diese Führung kann durch zwei parallel verlaufende Nuten realisiert werden, deren grösster Abstand wenig grösser ist als die Breite des Dachs und deren kleinster Abstand kleiner ist als die Breite des Dachs aber grösser als die Breite des "Stiels" der T-Form. Die Führung nimmt das Dach vom T der Linearführung 5 auf. Die Linearführung 5 ist ihrerseits fest mit der Tischplatte 2 verbunden.

Die Verbindungen der Knotenpunkte 41.3 und 42.3 werden derart dimensioniert, dass in der Grundstellung aller Scherenmechaniken 41, 42, 43, 44 die Tischplatte 2 parallel zu der Ebene liegt, die durch die Rotationsachsen 9 aller Exzenterscheiben 41.11, 41.21, 42.11, 42.21 definiert ist.

Figur 1c zeigt den Antrieb 3 des Vibrationstisches 1 von schräg oben. Die Tischplatte 2 ist nicht gezeigt. Es sind alle vier Scherenmechaniken 41, 42, 43, 44 erkennbar. Jede hat einen Knotenpunkt 41.3, 42.3, 43.3, 44.3. Alle ersten Schenkel 41.1, 42.1, 43.1 und 44.1 befinden sich in der Ansicht von oben auf der linken Seite des Knotenpunktes der betreffenden Scherenmechanik 41, 42, 43 oder 44. Alle zweiten Schenkel 41.2, 42.2, 43.2, 44.2 befinden sich in der Ansicht von oben auf der rechten Seite des Knotenpunktes der betreffenden Scherenmechanik 41, 42, 43 oder 44.

Die Knotenpunkte 41.3, 42.3, 43.3, 44.3 liegen in der Grundstellung in zwei parallel Reihen 13.2 und 13.1. Im vorliegenden Fall spannen die Knotenpunkte 41.3, 42.3, 43.3, 44.3 in ihrer Grundstellung ein Rechteck 13.3 auf. Die zweiten Schenkel der hinteren Reihe 43.2 und 41.2 und die ersten Schenkel der vorderen Reihe 42.1 und 44.1 liegen innerhalb des Rechtecks 13.3 und sind daher innere Schenkel. Die ersten Schenkel der hinteren Reihe 43.1 und 41.1 und die zweiten Schenkel der vorderen Reihe 42.2 und 44.2 liegen ausserhalb des Rechtecks 13.3 und sind daher äussere Schenkel.

Unterhalb der Scherenmechanik 41 ist der Motor 61 angeordnet. Die durch den Motor 61 erzeugte Rotation wird mittels eines Riemens auf die Antriebsachse 61.1 übertragen. Die Antriebsachse 61.1 liegt senkrecht zu den Ebenen der Scherenmechaniken. Dreht sich die Antriebsachse 61.1, so versetzt sie die Exzenterscheiben 41.21 und 43.21 in eine Drehung um ihre Rotationsachse 9. Somit werden die zweiten Schenkel 43.2 und 41.2 der beiden hinteren Scherenmechaniken 41 und 43 durch denselben Motor 61 in Bewegung versetzt.

Analog treibt ein nicht gezeigter Motor 63, der unterhalb der Scherenmechanik 43 angeordnet ist, eine Antriebsachse 63.1 an und darüber die beiden ersten Schenkel 41.1 und 43.1 der beiden hinteren Scherenmechaniken 41 und 43.

Der Antrieb der beiden ersten Schenkel 42.1 und 44.1 der vorderen Scherenmechaniken 44 und 42 wird analog durch den Motor 64 und die Antriebsachse 64.1 realisiert. Der Antrieb der beiden zweiten Schenkel 42.2 und 44.2 der vorderen Scherenmechaniken 44 und 42 wird analog durch den Motor 62 und die Antriebsachse 62.1 realisiert.

Die Knotenpunkte 41.3 und 43.3 der hinteren Reihe 13.2 werden fest mit der Tischplatte 2 verbunden. Dazu sind die Hülsen, in denen die Knotenpunkte 41.3 und 43.3 liegen mit einem Balken mit Schraublöchern versehen. Durch die Schraublöcher kann der Balken an der Tischplatte 2 befestigt werden, indem Schrauben durch die Schraublöcher in die Tischplatte 2 geschraubt werden. Somit ist dann Hülse und damit auch der Knotenpunkt 41.3, 43.3 an der Tischplatte 2 fest befestigt.

Die Knotenpunkte 44.3 und 42.3 der vorderen Reihe 13.1 werden über eine Linearführung 5 mit der Tischplatte 2 verbunden. Beim Knotenpunkt 44.3 ist die Hülse mit der Führung in der Form von zwei parallel verlaufende Nuten zu sehen. Beim Knotenpunkt 42.3 ist das eigentlich ebenfalls mit Schrauben an der Tischplatte befestigte Teil der Linearführung 5 erkennbar, welches einen T-Träger aufweist, dessen Dach gerade von den Nuten der Hülse aufgenommen werden kann.

Die Motoren 61, 62, 63, 64 und die Antriebsachsen 61.1, 62.1, 63.1, 64.1 und die Rotationsachsen 9 der Exzenterscheiben 41.11, 41.21, 42.11, 42.21, 43.11, 43.21, 44.11, 44.21 sind an einem gemeinsamen Gestell befestigt, welches eine Basis darstellt gegenüber der sich die Tischplatte 2 bewegen lässt.

Zwischen allen Scherenmechaniken 41, 42, 43, 44, etwa in der Mitte des Rechtecks 13.3, ist zudem ein Distanzsensor 7 angeordnet, der den Abstand oder die Änderung des Abstandes zur Tischplatte 2 messen kann. Der Distanzsensor 7 ist ebenfalls am gemeinsamen Gestell befestigt.

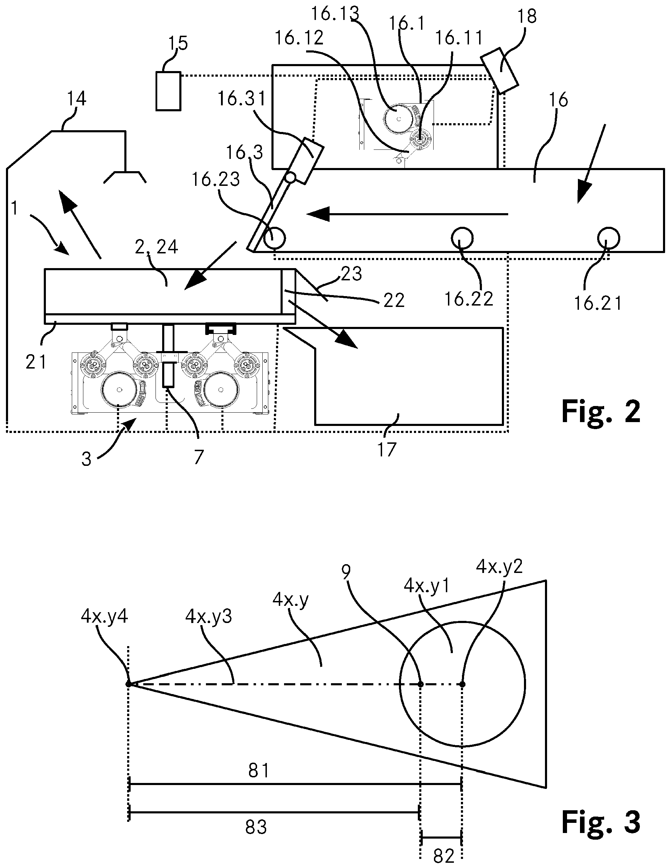

Figur 2 zeigt eine schematische Zeichnung eines erfindungsgemässen Zuführsystems. Das Zuführsystem umfasst einen erfindungsgemässen Vibrationstisch 1, einen Bunker 16 und einen Rücklaufbehälter 17.

Der Weg der Teile des Schüttgutes durch das Zuführsystem ist durch Pfeile markiert: Das Schüttgut wird in den Bunker 16 gegeben und von dort in kleinen Portionen auf den Vibrationstisch 2 transportiert. Durch Betreiben des Vibrationstisches 2 werden die Teile ausgebreitet. Dann wird ihre Lage mit der Kamera 15 erfasst. Mit Hilfe der Information der Kamera 15 werden die richtig liegenden Teile mit dem Roboter 14 gegriffen und ihrer Bestimmung zugeführt. Durch erneute Bewegung des Vibrationstisches 2 wird die Lage der Teile geändert, die Situation mit der Kamera 15 erneut erfasst und alle geeigneten Teile vom Roboter 14 abtransportiert. Sollen keine weiteren Teile vom Roboter 14 gegriffen werden, beispielsweise, weil sie defekt erscheinen oder weil ein anderer Typ vom Teilen gewünscht ist, wird die Entleerklappe 23 durch den Klappenantrieb 22 geöffnet und der Vibrationstisch 1 derart betrieben, dass die Teile durch die geöffnete Entleerklappe 23 wandern und von dort aus in den Rücklaufbehälter 17 fallen.

Zu Beginn des Betriebes wird der Vibrationstisch 2 in die Grundstellung gebracht. Dazu wird die Höhe der Tischplatte 2 mit Hilfe des Distanzsensors 7 beobachtet. Jedes gemeinsam angetriebene Paar von Exzenterscheiben wird dabei nacheinander jeweils solange bewegt, bis die Höhe der Tischplatte 2 auf dem tiefsten Punkt des Antriebszyklus ist.

Nachdem das Schüttgut in den Bunker 16 gefüllt wurde, wird der Bunker 16 durch den Bunkerantrieb 16.1 solange bewegt, bis Teile bei der hintersten Lichtschranke 16.23 detektiert werden. Dort verhindert die Zuführklappe 16.3, dass die Teile zu einer unerwünschten Zeit auf den Vibrationstisch 2 fallen. Die Zuführklappe 16.3 kann durch einen Klappenantrieb 16.31 geöffnet und geschlossen werden. Dass überhaupt Schüttgut in den Bunker 16 nachgefüllt wurde, erfasst die vordere Lichtschranke 21.1.

Mit Hilfe der vorderen, mittleren und hinteren Lichtschranke 16.21, 16.22 und 16.23 lässt sich die Entnahmezeit pro Teil bei fast leerem Bunker 16 abschätzen und damit eine Zeit bis zur Notwendigkeit des Nachfüllens ermitteln.

Dazu wird der Zeitpunkt ermittelt, zu dem das letzte Teil die mittlere Lichtschranke 16.22 passiert. Ab diesem Zeitpunkt werden die vom Roboter 14 entnommenen Teile erfasst. Die Zählung wird in dem Moment gestoppt, in dem das letzte Teil die hintere Lichtschranke 16.23 passiert hat. Die Anzahl der gezählten Teile sei N. Für die Entnahme von N Teilen wird also die Zeitdifferenz zwischen der letzten Detektion in der mittleren Lichtschranke 16.22 und der letzten Detektion in der hinteren Lichtschranke 16.23 benötigt. Ausserdem ist auf diese Art bekannt, dass beim fast leeren Bunker N Teile zwischen den beiden Lichtschranken liegen. Da die Entnahmezeit pro Teil $\Delta t/N$ ist, sollte ein Nutzer der eine Restlaufzeit T vor dem Nachfüllen gewarnt werden soll, also genau dann gewarnt werden, wenn noch $NT/\Delta t$ Teile im Bunker sind. Das ist in etwa dann der Fall, wenn seit der letzten Detektion eines Teils durch die mittlere Lichtschranke 16.22 bereits $N-NT/\Delta t$ Teile entnommen wurden und dies ist im Schnitt nach einer Zeit von $\Delta t-T$ der Fall. Zur weiteren Verbesserung der Schätzung können die Messungen wiederholt und kombiniert werden sowie durch Nutzereingaben angepasst werden.

Die Steuerung 18 empfängt die Daten aller Lichtschranken 16.21, 16.22, 16.23, des Roboterarms 14, der Antriebe 3, 22, 16.31, 16.1 und der Kamera 15. Die Datenleitungen sind mit gestrichelten Linien angedeutet. In der Steuerung 18 werden auch die Daten zur Ermittlung der Zeit bis zur Notwendigkeit des Nachfüllens gespeichert und genutzt, um den Nutzer zum gewünschten Zeitpunkt zu benachrichtigen. Die Steuerung 18 bestimmt ausserdem die Art und die Dauer des Betriebes des Vibrationstisches 1 in Abhängigkeit der Signale von der Kamera 15 und die Art und Dauer des Betriebes der Bunkerantriebes 16.1 in Abhängigkeit der Signale von den Lichtschranken 16.23, 16.22 und 16.21. Die Steuerung 18 kann zudem Eingaben des Nutzers berücksichtigen.

Der Bunkerantrieb 16.1 umfasst eine Exzenterscheibe 16.11, einen Schenkel 16.12 und einen Motor 16.13. Der Motor 16.13 treibt die Exzenterscheibe 16.11 derart an, dass der Bunker 16 sich in einer ersten Antriebsphase nach oben und in Richtung Zuführklappe 16.3 bewegt und in der zweiten Antriebsphase zurück in die Ausgangsposition. Da der Impulsübertrag auf die Teile in der ersten Antriebsphase grösser ist als in der zweiten Antriebsphase, wandern die Teile im Bunker auf die Zuführklappe 16.3 zu und, wenn diese geöffnet ist, durch sie hindurch.

Figur 3 zeigt eine Skizze eines Schenkels 4x.y einer Scherenmechanik. Der Schenkel 4x.y ist als Dreieck skizziert. Eine seiner Ecken ist der Befestigungspunkt 4x.y4. Knapp oberhalb der Grundseite zu diese Ecke weist der Schenkel 4x.y ein kreisrundes Loch auf, in welches eine Exzenterscheibe 4x.y1 eingelassen ist. Der Mittelpunkt der Exzenterscheibe und der Mittelpunkt des Schenkels 4x.y2 liegen am selben Ort. Die Rotationsachse 9 ist ebenfalls eingezeichnet. Der Abstand zwischen Mittelpunkt der Exzenterscheibe und der Rotationsache 9 ist die Exzentrizität 82. Der Abstand zwischen dem Befestigungspunkt 4x.y4 und dem Mittelpunkt des Schenkels 4x.ys ist die Länge 81 des Schenkels 4x.y. Die Strecke zwischen diesen beiden Punkten, hier strichpunktiert eingezeichnet, ist die Schenkelstrecke 4x.y3.

Im gezeigten Fall liegt die Rotationsachse 9 auf der Schenkelstrecke 4x.y3. Daher befindet sich der Schenkel 4x.y, so wie ihn Figur 3 zeigt, in der Grundstellung.

Die minimale effektive Länge, a, 83 ist gleich der Schenkellänge 81 abzüglich der Exzentrizität 82.

Der Abstand zwischen Rotationsachse 9 und Befestigungspunkt 4x.y4 ist die effektive Länge und sie steigt auf die Schenkellänge 81 plus die Exzentrizität 82 an, wenn sich die Exzenterscheibe um 180° gedreht hat. Die effektive Länge des Schenkels 4x.y, also die Länge jenseits der Rotationsachse 9, verändert sich durch die Drehung der Exzenterscheibe 4x.y1.

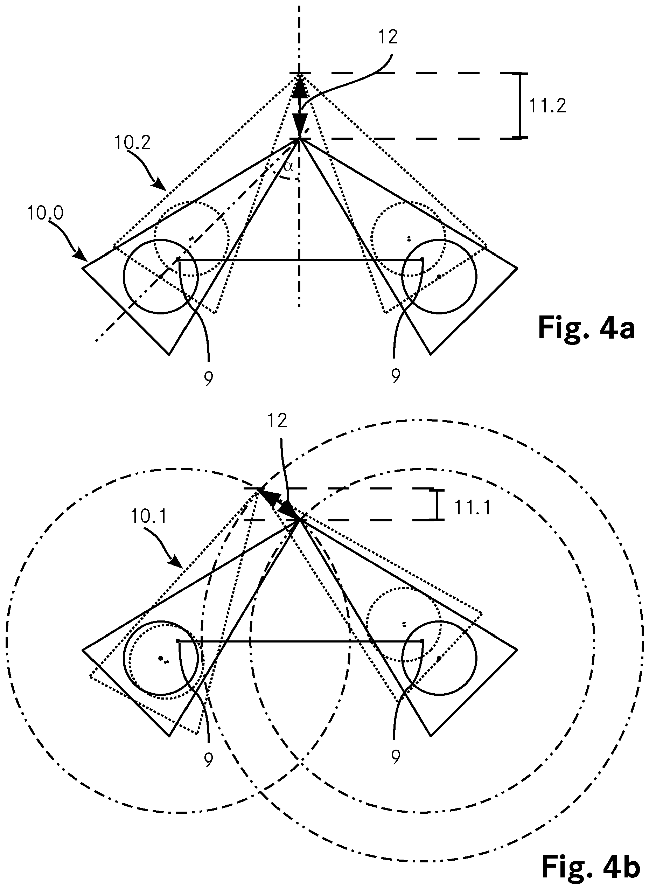

Figur 4a zeigte eine Scherenmechanik mit zwei Schenkeln vom Typ aus Figur 3, deren Exzenterscheiben sich synchron drehen. Es handelt sich um einen Doppelantrieb. Am Knotenpunkt sind die beiden Schenkel an ihren Befestigungspunkten verbunden. Die Rotationsachsen 9 sind beide ortsfest und haben somit während des gesamten Antriebszyklus denselben Abstand voneinander.

In durchgezogenen Linien ist die Position der beiden Schenkel in der Grundstellung 10.0 eingezeichnet. Die Situation lässt sich durch ein Dreieck beschreiben, dessen Ecken die Rotationsachsen 9 und den Knotenpunkt bilden. Da beide Schenkel in der Grundstellung sind und beide Schenkel gleich dimensioniert sind, ist das Dreieck gleichschenklig. Die Seiten des Dreiecks haben in der Grundstellung die Längen a, a und G. Die Grundseite dieses Dreiecks ist die Strecke zwischen den beiden Rotationsachsen und hat die Länge G. Wie in Zusammenhang mit Figur 3 beschrieben, ist a die minimale effektive Länge. Die Höhe des Dreiecks entspricht dem geringsten Abstand, den der Knotenpunkt von der Grundseite haben kann.

Dreht man nun die Exzenterscheiben synchron, so nimmt die effektive Länge der Schenkel zu und zwar bis sie die maximale effektive Länge von a+2e haben, wobei e die Exzentrizität ist. Diese Situation ist mit gestrichelten Linien skizziert. Der Knotenpunkt hat nun seine grösste Höhe. Es handelt sich also um die Stellung mit der maximalen Amplitude 10.2. Das Dreieck, dessen Ecken die Rotationsachsen 9 und der Knotenpunkt bildet, ist immer noch gleichschenklig, aber sein Öffnungswinkel hat gegenüber dem Dreieck der Grundstellung abgenommen. Die Seitenlängen sind a+2e, a+2e und G.

Egal wo im Antriebszyklus sich die Exzenterscheiben gerade befinden, die effektive Länge der beiden Schenkel ist stets gleich. Die entstehenden Dreiecke sind also immer gleichschenklig. Der Knotenpunkt liegt daher stets auf der Symmetrieachse, die allen entstehenden Dreiecken in dieser Situation gemein ist.

Der Knotenpunkt bewegt sich beim Doppelantreiben somit zwischen den gezeigten Extremwerten auf und ab. Die maximale Amplitude 11.2 dieser Schwingung ist der Abstand zwischen der Höhe des Knotenpunktes bei der Stellung mit der maximalen Amplitude 10.2 und der Höhe des Knotenpunktes in der Grundstellung. Die Bewegung des Knotenpunktes 12 ist rein vertikal und in Figur 4a mit einem Doppelpfeil eingezeichnet.

Figur 4b zeigt eine ähnliche Situation. In durchgezogenen Linien sind dieselben Schenkel in derselben Grundstellung gezeigt wie in Figur 4a. In der Grundstellung liegt also auch in diesem Fall der Knotenpunkt auf der Symmetrielinie des Dreiecks und in der gleichen Höhe wie in Figur 4a.

Gestrichelt gezeigt ist in Figur 4b die Situation, in der beim Einfachantrieb der rechte Schenkel eine maximale effektive Länge aufweist. Nach einer 180° Drehung der Exzenterscheibe gegenüber der Grundstellung, also nach einem halben Antriebszyklus, hat das entstehende Dreieck zwischen den Rotationsachsen und dem Knotenpunkt die Seitenlängen a, a+2e und G und ist damit nicht mehr gleichschenklig. Seine Höhe ist geringer als im Fall der Figur 4a.

Der Knotenpunkt bewegt sich beim Einfachantrieb in vertikaler Richtung zwischen der Höhe der Grundstellung und der in Figur 4b gezeigten mittlerer Höhe auf und ab. Die Amplitude dieser Schwingung ist die mittlere Amplitude 11.1.

Die Bewegung des Knotenpunktes 12 wird durch den nicht angetriebenen, hier linken, Schenkel beschränkt: Der Befestigungspunkt des linken Schenkels kann sich nur auf einem Kreis mit dem Radius gleich der effektiven Länge des linken Schenkels um die linke Rotationsachse bewegen. Die effektive Länge des linken Schenkels bleibt während des gesamten Antriebszyklus gleich. Dieser Kreis ist in Figur 4b eingezeichnet.

Der rechte Schenkel ändert seine effektive Länge während des Antriebszyklus. Der Befestigungspunkt des rechten Schenkels muss stets auf einem Kreis um die rechte Rotationsachse liegen, dessen Radius der effektiven Länge des rechten Schenkels zum entsprechenden Punkt im Antriebszyklus entspricht. Je nach Punkt im Antriebszyklus hat dieser Kreis also einen unterschiedlichen Radius. In Figur 4b sind sowohl der kleine als auch der grösste dieser Kreise. Beim grössten Kreis ist der Radius gleich der maximalen effektiven Länge und somit die Schenkellänge plus der Exzentrizität. Beim kleinsten Kreis ist der Radius gleich der kleinsten effektiven Länge und somit die Schenkellänge minus die Exzentrizität.

Der Knotenpunkt muss, da er beiden Schenkeln gemeinsam ist, stets auf dem Schnittpunkt des Kreises des linken und des Kreises des rechten Schenkels liegen. Er folgt also dem Kreis um den nicht-angetriebenen Schenkel. Die Bewegung des Knotenpunktes 12 ist daher sowohl vertikal als auch horizontal und in Figur 4b mit einem Doppelpfeil eingezeichnet. Die Schwingung folgt dabei allerdings nicht dem ganzen Kreis, sondern nur einem Kreisabschnitt. Der Kreisabschnitt wird begrenzt durch die Schnittpunkte mit dem kleinsten und mit dem grössten Kreis des rechten Schenkels.

Zusammenfassend ist festzustellen, dass ein Vibrationstisch auch mehr als vier Scherenmechaniken aufweisen kann, beispielsweise sechs oder acht. Auch kann die Anordnung der Knotenpunkte trapezförmig sein, anstelle von rechteckig. Es ist möglich, jede Exzenterscheibe einzeln und unabhängig von allen anderen anzutreiben, statt sie in Paaren zusammenzufassen. Auch können die Schenkel auf andere Weise angetrieben werden, beispielsweise kann ein Linearmotor die Exzenterscheiben und die Motoren ersetzen. Die Schenkel können statt in einem Knotenpunkt zusammenkommen auch mit einem Verbindungssteg an ihren Befestigungspunkten in einer festen Distanz zueinander gehalten werden. Die Linearführung kann vorne oder hinten eingesetzt werden. Zudem ist eine virtuelle Linearführung denkbar, bei der die eigentlich nicht angetriebenen Scherenmechaniken doch soweit angetrieben oder frei gelassen werden, dass sich einen Phasenverschiebung in der Antriebsphase der Schenkel einer Scherenmechanik ergibt, die gerade die benötigte horizontale Bewegung zulässt.

Das Zuführsystem kann einen anderen Bunkerantrieb aufweisen. Beispielswiese kann im Bunker ein Förderband die Teile transportieren oder ein Kamm kann sie in die gewünschte Richtung schieben. Zudem kann der Bunkerantrieb auch Scherenmechaniken umfassen, wie sie vom Vibrationstisch bekannt sind. In einer Ausführungsform wird der Bunker durch einen zweien Vibrationstisch realisiert.

**Patentansprüche**

1. Vibrationstisch (1) umfassend eine Tischplatte (2) und einen Antrieb (3), wobei der Antrieb (3) vier Scherenmechaniken (41, 42, 43, 44) mit je einem ersten (41.1, 42.1, 43.1, 44.1) und einem zweiten Schenkel (41.2, 42.2, 43.2, 44.2) und einem Knotenpunkt (41.3, 42.3, 43.3, 44.3) umfasst, wobei die Knotenpunkte (41.3, 42.3, 43.3, 44.3) an der Tischplatte (2) befestigt sind und der erste Schenkel (41.1, 42.1, 43.1, 44.1) unabhängig vom zweiten Schenkel (41.2, 42.2, 43.2, 44.2) bewegt werden kann.

2. Vibrationstisch (1) nach Anspruch 1, wobei jeder Schenkel (41.1, 42.1, 43.1, 44.1, 41.2, 42.2, 43.2, 44.2) an einer Exzenterscheibe (41.11, 42.11, 43.11, 44.11, 41.21, 42.21, 43.21, 44.21) drehbar befestigt ist und durch Drehung der Exzenterscheibe (41.11, 42.11, 43.1 1, 44.11, 41.21, 42.21, 43.21, 44.21) bewegt werden kann.

3. Vibrationstisch (1) nach einem der Ansprüche 1 bis 2, wobei die Knotenpunkte (41.3, 42.3, 43.3, 44.3) in einer vorderen und einer hinteren Reihe angeordnet sind und die vordere und die hintere Reihe parallel zueinander verlaufen und wobei die Scherenmechaniken (41, 42, 43, 44) senkrecht zu den Reihen ausgerichtet sind und wobei zwei der Knotenpunkte (42.3, 44.3), die in der vorderen Reihe liegen, an einer Linearführung (5) an der Tischplatte befestigt sind und zwei der Knotenpunkte (41.3, 43.3), die in der hinteren Reihe liegen, fest an der Tischplatte befestigt sind.

4. Vibrationstisch (1) nach einem der Ansprüche 1 bis 3, wobei vier elektronisch synchronisierte Motoren (61, 62, 63, 64), bevorzugt Servomotoren, die Schenkel (41.1, 42.1, 43.1, 44.1, 41.2, 42.2, 43.2, 44.2) antreiben und zwar bevorzugt, indem jeder Motor (61, 62, 63, 64) die Exzenterscheiben (41.11, 42.11, 43.11, 44.11, 41.21, 42.21, 43.21, 44.21) von jeweils zwei Schenkeln (41.1, 42.1, 43.1, 44.1, 41.2, 42.2, 43.2, 44.2), insbesondere von zwei gegenüberliegenden Schenkeln, in Drehung versetzt.

5. Vibrationstisch (1) nach einem der Ansprüche 1 bis 4, wobei die Tischplatte eine Förderfläche (21), einen Klappen-Antrieb (22), und eine Umrandung (24) umfasst und wobei die Umrandung (24) eine Entleerklappe (23) umfasst, wobei die Knotenpunkte (41.3, 42.3, 43.3, 44.3) an der Umrandung (24) befestigt sind und die Entleerklappe (23) durch den Klappen-Antrieb (22) in eine geschlossene und eine geöffnete Stellung gebracht werden kann.

6. Vibrationstisch nach Anspruch 5, wobei die Förderfläche (23) in die Umrandung (24) einschiebbar ist.

7. Vibrationstisch nach einem der Ansprüche 1 bis 5, umfassend einen Distanzsensor (7), der zwischen den Scherenmechaniken (41, 42, 43, 44) angeordnet ist und die Höhe der Tischplatte (2) erfasst.

8. Verfahren zum Betreiben eines Vibrationstisches nach Anspruch 7, wobei zum Einstellen einer Grundstellung folgende Schritte durchgeführt werden:

  - Bewegen von einem Schenkel oder einer Gruppe von gemeinsam angetriebenen Schenkeln, bis die Höhe der Tischplatte den tiefsten durch diese Bewegung erreichbaren Wert hat und somit der oder die Schenkel in ihrer Grundstellung sind, während alle anderen Schenkel ihre aktuelle Antriebsstellung beibehalten,
  - Wiederholen es ersten Schrittes mit den weiteren Schenkeln oder Gruppen von gemeinsam angetriebenen Schenkeln, bis alle Schenkel ihre Grundstellung erreicht haben.

9. Verfahren zum Betreiben eines Vibrationstisches nach einem der Ansprüche 1 bis 7 um Teile in eine zweite Richtung zu bewegen, wobei alle ersten Schenkel synchron angetrieben werden.

10. Verfahren zum Betreiben eines Vibrationstisches nach einem der Ansprüche 1 bis 7, um Teile auf einer ersten Hälfte des Vibrationstisches zu wenden, während die Teile dabei in Richtung der zweiten Hälfte springen und währenddessen die Teile auf der zweiten Hälfte des Vibrationstisches weitgehend ortstreu sind, wobei alle Schenkel der in der ersten Hälfte befestigten Scherenmechaniken synchron angetrieben werden.

11. Verfahren zum Betreiben eines Vibrationstisches nach einem der Ansprüche 1 bis 7, um Teile zu wenden und gleichmässig über die Fläche der Tischplatte zu verteilen, wobei alle Schenkel synchron angetrieben werden.

12. Zuführsystem umfassend einen Vibrationstisch nach einem der Ansprüche 1 bis 7 und einen Bunker und einen Rücklaufbehälter, wobei der Rücklaufbehälter zumindest teilweise unterhalb des Bunkers steht und der Vibrationstisch und der Rücklaufbehälter derart angeordnet sind, dass Teile vom Vibrationstisch aus in den Rücklaufbehälter springen können.

13. Zuführsystem nach Anspruch 12, wobei der Bunker eine hintere und eine mittlere Lichtschranke umfasst, wobei die hintere Lichtschranke einen ersten Bereich vor der Zuführklappe im Inneren des Bunkers beobachtet und die mittlere Lichtschranke das Innere des Bunkers bei einem zweiter Bereich, der einen festen und bekannten Abstand vom ersten Bereich hat, beobachtet.

14. Verfahren zum Einlernen eines Zuführsystems nach Anspruch 13, wobei das Zuführsystem mit einem Roboter zusammenarbeitet, der Schüttgut von dem Fördertisch entnimmt, wobei der Zeitraum von der letzten Detektion eines Teils durch die mittlere Lichtschranke bis zur letzten Detektion eines Teils durch die hintere Lichtschranke bestimmt wird und die in diesem Zeitraum vom Roboter entnommenen Teile gezählt werden, und die Dauer des Zeitraums durch die Anzahl der Teile geteilt wird und dieser Wert gespeichert wird.

15. Verfahren zum Betrieb eines Zuführsystems nach einem der der Ansprüche 12 bis 13, wobei nach dem Einfüllen von Schüttgut der Bunker mittels des Bunkerantriebs so lange angetrieben wird, bis die hintere Lichtschranke Teile detektiert.

16. Verfahren nach Anspruch 15, umfassend die Schritte Öffnen der Bunkerklappe und Antreiben des Bunkers mit Hilfe des Bunkerantriebs, so dass Teile aus dem Bunker auf den Vibrationstisch fallen und Betreiben des Vibrationstisches mit Hilfe seines Antriebs, so dass sich die Teile auf der Förderfläche verteilen, bevorzugt unter Verwendung der Verfahren nach Anspruch 9 und 11, und Entnahme aller passend liegenden Teile auf der Förderfläche und anschliessend erneutes Betreiben des Vibrationstisches, bevorzugt unter Verwendung des Verfahrens nach einem der Ansprüche 10 oder 11, wenn sich noch Teile darauf befinden, die entnommen werden sollen und wenn Teile auf dem Vibrationstisch verbleiben, welche nicht entnommen werden sollen, Öffnen der Entleerklappe und Betreiben des Vibrationstisches, so dass die Teile in den Rücklaufbehälter fallen, bevorzugt unter Verwendung des Verfahrens gemäss Anspruch 9.

**Fig. 1a**

**Fig. 1b**

**Fig. 1c**

**Fig. 2**

**Fig. 3**

Fig. 4a

Fig. 4b

**EUROPÄISCHER RECHERCHENBERICHT**

Nummer der Anmeldung

EP 19 20 1155

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | JP H01 303218 A (KITADA SUKEELE KK) 7. Dezember 1989 (1989-12-07) | 1,2,4-12 | INV. B65G27/32 |
| A | * Absatz [0001]; Abbildung 4 * | 3,13-16 | |
| Y | US 5 816 386 A (CARLYLE ALLAN M [CA]) 6. Oktober 1998 (1998-10-06) * Spalte 2, Zeile 65 - Spalte 3, Zeile 42; Abbildung 1 * | 1,2,4,7 | |
| Y | WO 96/15055 A1 (FMC CORP [US]) 23. Mai 1996 (1996-05-23) * Seite 4, Zeile 10 - Seite 9, Zeile 5; Abbildung 8 * | 1,2,4, 7-12 | |
| Y | JP 2012 229118 A (SINFONIA TECHNOLOGY CO LTD) 22. November 2012 (2012-11-22) * Absatz [0005] - Absatz [0070]; Abbildungen 1-14 * | 1,2,4-12 | |
| Y | WO 03/104116 A1 (FLEXFACTORY AG [CH]; BUECHI FELIX [CH]) 18. Dezember 2003 (2003-12-18) * Seite 12, Zeile 20 - Seite 20, Zeile 2; Anspruch 5; Abbildungen 1-15 * | 5-7 | RECHERCHIERTE SACHGEBIETE (IPC) B65G B07B |
| Y | flexfactory ag: "Flexfactory anyfeed promotion video 2019", Youtube, 11. Oktober 2017 (2017-10-11), Seite 1 pp., XP054980325, Gefunden im Internet: URL:https://www.youtube.com/watch?v=Gx0Y1X y7VeA [gefunden am 2020-03-25] * das ganze Dokument * | 12 | |

-/--

Der vorliegende Recherchenbericht wurde für alle Patentansprüche erstellt

| Recherchenort | Abschlußdatum der Recherche | Prüfer |
|---|---|---|
| Den Haag | 31. März 2020 | Scheller, Johannes |

EPO FORM 1503 03.82 (P04C03)

Seite 1 von 2

**Europäisches Patentamt**
**European Patent Office**
**Office européen des brevets**

# EUROPÄISCHER RECHERCHENBERICHT

**Nummer der Anmeldung**

EP 19 20 1155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP H11 165846 A (HAIMEKA KK) 22. Juni 1999 (1999-06-22) * Absatz [0014] - Absatz [0019]; Abbildung 2 * ----- | 2,4 | |
| Y | JP S59 92813 A (SHINKO ELECTRIC CO LTD) 29. Mai 1984 (1984-05-29) * Absatz [0001]; Abbildung 8 * ----- | 10,11 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 31. März 2020 | Scheller, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 20 1155

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2020

| Im Recherchenbericht angeführtes Patentdokument | Datum der Veröffentlichung | Mitglied(er) der Patentfamilie | Datum der Veröffentlichung |
|---|---|---|---|
| JP H01303218 A | 07-12-1989 | KEINE | |
| US 5816386 A | 06-10-1998 | CA 2210271 A1<br>US 5816386 A | 15-01-1998<br>06-10-1998 |
| WO 9615055 A1 | 23-05-1996 | AU 693977 B2<br>CA 2204505 A1<br>EP 0790946 A1<br>ES 2196091 T3<br>US 5602433 A<br>WO 9615055 A1 | 09-07-1998<br>23-05-1996<br>27-08-1997<br>16-12-2003<br>11-02-1997<br>23-05-1996 |
| JP 2012229118 A | 22-11-2012 | JP 5793942 B2<br>JP 2012229118 A | 14-10-2015<br>22-11-2012 |
| WO 03104116 A1 | 18-12-2003 | AT 328824 T<br>AU 2003229237 A1<br>DK 1513749 T3<br>EP 1513749 A1<br>US 2005199470 A1<br>WO 03104116 A1 | 15-06-2006<br>22-12-2003<br>09-10-2006<br>16-03-2005<br>15-09-2005<br>18-12-2003 |
| JP H11165846 A | 22-06-1999 | KEINE | |
| JP S5992813 A | 29-05-1984 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2393739 B1, Asyril